# EUROPEAN PATENT APPLICATION

(11) **EP 2 927 122 A1**
(43) Date of publication of application: **07.10.2015**
(21) Application number: 15151731.5
(22) Date of filing: 20.01.2015
(51) Int. Cl.: B64C 29/00

(54) **Vertically landing aircraft**

(30) Priority: 31.03.2014 US 201414231610
(71) Applicant: The Boeing Company, Chicago, IL 60606-2016 (US)
(72) Inventor: Newman, Daniel Ira, Lafayette Hill, IL Illinois 19444 (US); Lacy, Roger W., West Chester, IL Illinois 19382 (US); Preator, Robin M., Collingswood, IL Illinois 08108 (US); Gianopulos, Elia N., Rose Valley, IL Illinois 19086 (US); Ziegenbein, Perry, Glassboro, IL Illinois 08028 (US)
(74) Representative: Witte, Weller & Partner Patentanwälte mbB

(57) **Abstract**

An aircraft (10) takes off, lands, or hovers with at least one wing-mounted thrust-producing device (12) attached to at least one wing (16) of the aircraft and at least two fuselage-mounted thrust-producing devices (18) attached to a fuselage of the aircraft both providing vertical thrust. The aircraft (10) is flown while the at least one wing-mounted thrust-producing device (12) provides horizontal thrust and with the at least two fuselage-mounted thrust-producing devices (18) not providing any thrust.

## Description

### FIELD OF THE DISCLOSURE

This disclosure relates to vertical takeoff and landing aircraft and to methods for flying them.

### BACKGROUND

Most aircraft are not capable of vertical flight operations, such as vertical landing, vertical takeoff, and hover. Aircraft that are capable of vertical operations typically utilize systems that are not efficient for both vertical flight and horizontal flight.

An aircraft and method of flight is needed to resolve one or more issues of one or more of the existing aircrafts or methods of flight.

### SUMMARY

In one embodiment, an aircraft includes at least one wing-mounted thrust-producing device and at least two fuselage-mounted thrust-producing devices. The at least one wing-mounted thrust-producing device is moveably attached to at least one wing of the aircraft and configured to move from a landing/takeoff/hover configuration in which the at least one wing-mounted thrust-producing device provides thrust in a vertical direction to a flight configuration in which the at least one wing-mounted thrust-producing device provides the thrust in a horizontal direction. The at least two fuselage-mounted thrust-producing devices are attached to a fuselage of the aircraft.

In another embodiment, an aircraft includes two wing-mounted thrust-producing devices and two fuselage-mounted thrust-producing devices. The two wing-mounted thrust-producing devices are moveably attached to opposed wings of the aircraft. The two fuselage-mounted thrust-producing devices are attached to a fuselage of the aircraft. When the aircraft is in horizontal flight the two wing-mounted thrust-producing devices are configured to provide horizontal thrust and the two fuselage-mounted thrust-producing devices are configured to not provide any thrust. When the aircraft is landing, taking off, or hovering each of the two wing-mounted thrust-producing devices and the two fuselage-mounted thrust-producing devices are configured to provide vertical thrust.

In still another embodiment, a method of flying an aircraft is disclosed. In one step, the aircraft takes off, lands, or hovers with at least one wing-mounted thrust-producing device attached to at least one wing of the aircraft and at least two fuselage-mounted thrust-producing devices attached to a fuselage of the aircraft both providing vertical thrust. In another step, the aircraft is flown while the at least one wing-mounted thrust-producing device provides horizontal thrust and with the at least two fuselage-mounted thrust-producing devices not providing any thrust.

The scope of the present disclosure is defined solely by the appended claims and is not affected by the statements within this summary.

### BRIEF DESCRIPTION OF THE DRAWINGS

The disclosure can be better understood with reference to the following drawings and description. The components in the figures are not necessarily to scale, emphasis instead being placed upon illustrating the principles of the disclosure.
Figure 1 illustrates a perspective view of one embodiment of an aircraft in a landing/takeoff/hover configuration;
Figure 2 illustrates a perspective view of the aircraft of Figure 1 disposed in a horizontal flight configuration; and
Figure 3 is a flowchart illustrating one embodiment of a method for flying an aircraft.

### DETAILED DESCRIPTION

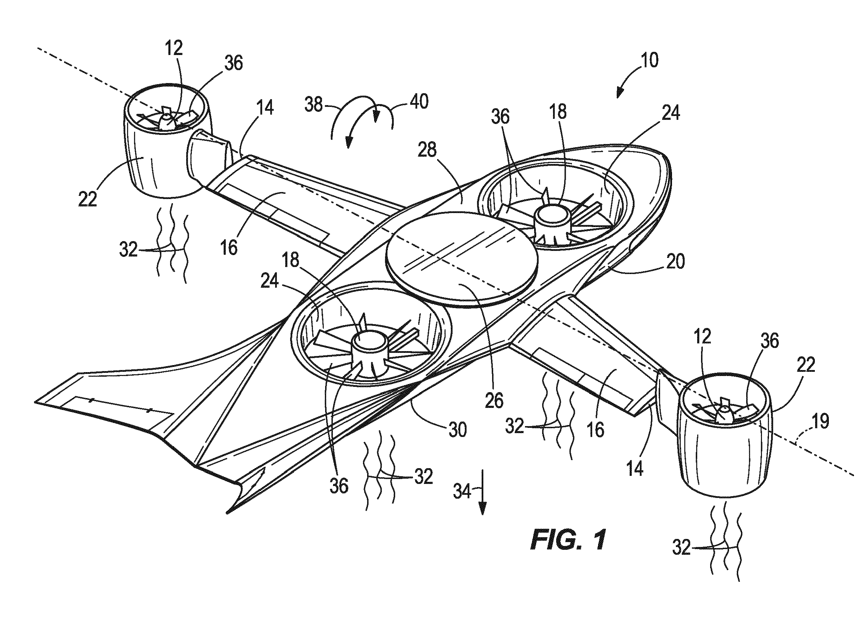

Figure 1 illustrates a perspective view of one embodiment of an aircraft 10 in a landing/takeoff/hover configuration (i.e. in a vertical flight operation such as a vertical landing, vertical takeoff, or hover). The aircraft 10 comprises two wing-mounted thrust-producing devices 12 moveably-attached to tips 14 of opposed wings 16, and two fuselage-mounted thrust producing devices 18 fixedly-attached to the fuselage 20 at forward and aft locations off of a centerline 19 between the two wing-mounted thrust-producing devices 12. In one embodiment, the two wing-mounted thrust producing devices 12 and the two fuselage-mounted thrust producing devices 18 may comprise fans. In other embodiments, the two wing-mounted thrust producing devices 12 and the two fuselage-mounted thrust producing devices 18 may vary in type, number, location, or configuration. The two wing-mounted thrust-producing devices 12 may be disposed within wing ducts 22, while the fuselage-mounted thrust-producing devices 18 may be disposed within fuselage ducts 24. In the landing/takeoff/hover configuration, panels 26 are moved uncovering the two fuselage-mounted thrust-producing devices 18 from both top 28 and bottom 30 of the aircraft 10. In the landing/takeoff/hover configuration, the two wing-mounted thrust-producing devices 12 and the two fuselage-mounted thrust-producing devices 18 are each oriented to provide vertical thrust 32 in a first direction 34 to assist the aircraft 10 in vertically landing, vertically taking off, or hovering at a low speed. In the landing/takeoff/hover configuration, the fan blades 36 of any two out of the four total wing-mounted thrust-producing devices 12 and fuselage-mounted thrust-producing devices 18 may be configured to spin in a clockwise direction 38, and the fan blades 36 of the remaining two out of the four total wing-mounted thrust-producing devices 12 and fuselage-mounted thrust-producing devices 18 may be configured to spin in a counter-clockwise direction 40. In other embodiments the fan blades 36 of the wing-mounted thrust-producing devices 12 and the fuselage-mounted thrust-producing devices 18 may be spun in varying directions relative to one another. In one low power setting, the two fuselage-mounted thrust-producing devices 18 may be primarily relied on for landing/takeoff/hover. In another low downwash setting, the two wing-mounted thrust-producing devices 12 may be primarily relied on for landing/takeoff/hover. In other embodiments, the two fuselage-mounted thrust-producing devices 18 and the two wing-mounted thrust-producing devices 12 may be relied on in varying amounts during landing/takeoff/hover.

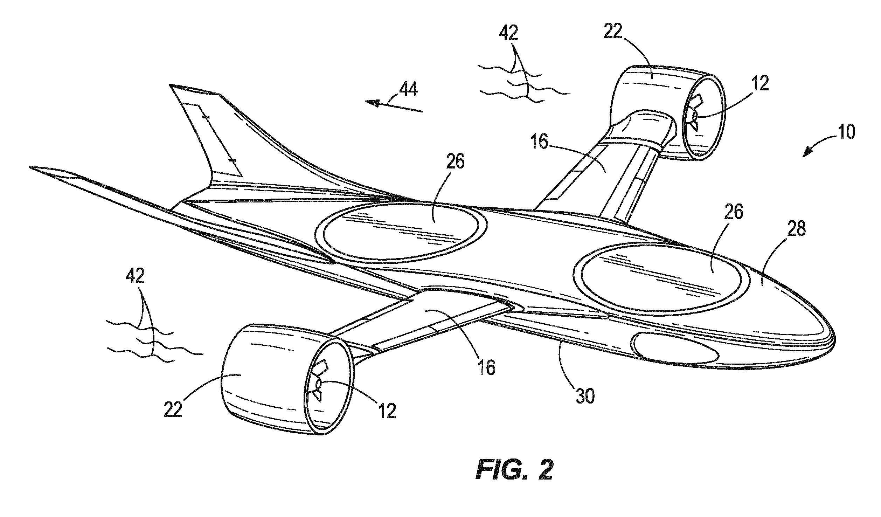

Figure 2 illustrates a perspective view of the aircraft 10 of Figure 1 disposed in a horizontal flight configuration. In the horizontal flight configuration, the two wing-mounted thrust-producing devices 12, along with the wing ducts 22 within which they are disposed, have moved (or rotated) relative to the opposed wings 16 from their landing/takeoff/hover configuration of Figure 1 to their flight configuration of Figure 2 to provide horizontal thrust 42 in a second direction 44 to assist the aircraft 10 in horizontally flying. In one embodiment, the aircraft 10 may be flown in a horizontal direction at a speed of up to 400 knots or more using the two wing-mounted thrust-producing devices 12. In other embodiments, the aircraft 10 may be flow at varying speeds using the two wing-mounted thrust-producing devices 12. In the horizontal flight configuration, the panels 26 have been moved to cover the two fuselage-mounted thrust-producing devices 18 (hidden from view) from both the top 28 and bottom 30 of the aircraft 10 and the two fuselage-mounted thrust-producing devices 18 (hidden from view) are configured to not provide any thrust.

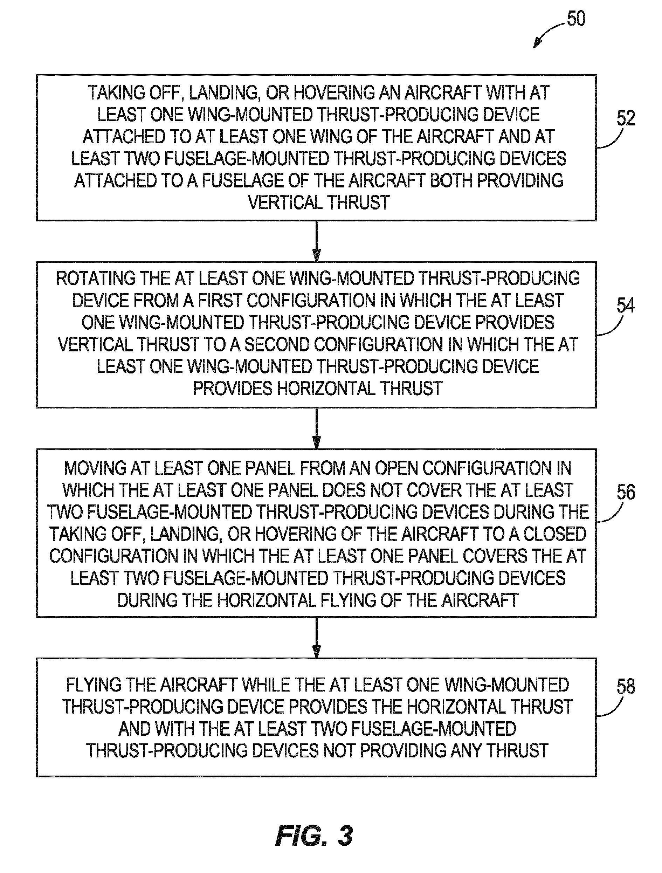

Figure 3 is a flowchart illustrating one embodiment of a method 50 for flying an aircraft. The method 50 may utilize the aircraft 10 of Figures 1 and 2. In other embodiments, the method 50 may utilize varying aircraft. In step 52, the aircraft takes off, lands, or hovers with at least one wing-mounted thrust-producing device attached to at least one wing of the aircraft and at least two fuselage-mounted thrust-producing devices attached to a fuselage of the aircraft both providing vertical thrust. In one embodiment, there are two wing-mounted thrust-producing devices and two fuselage-mounted thrust-producing devices. In one embodiment, the at least one wing-mounted thrust producing device and the at least two fuselage-mounted thrust producing devices may comprise fans. In other embodiments, the at least one wing-mounted thrust producing device and the at least two fuselage-mounted thrust producing devices may vary in type, number, location, or configuration. In one embodiment, step 52 further comprises the aircraft taking off, landing, or hovering with at least one panel moved to a configuration so that it does not cover the at least two fuselage-mounted thrust-producing devices. In one embodiment, in step 52 two or more panels are moved to an open configuration so they do not cover two fuselage-mounted thrust-producing devices. In other embodiments, any number of panels may be moved so that they do not cover any number of fuselage-mounted thrust-producing devices during takeoff, landing, or hovering. In one embodiment, step 52 further comprises fan blades of two out of four fans of the wing-mounted thrust-producing devices and the fuselage-mounted thrust-producing devices spinning in a clockwise direction, and the fan blades of the other two of the four fans of the wing-mounted thrust-producing devices and the fuselage-mounted thrust-producing devices spinning in a counter-clockwise direction. In other embodiments, step 52 may comprise fan blades of any number of fans of the wing-mounted thrust-producing devices and the fuselage-mounted thrust-producing devices spinning in varying directions.

In step 54, the at least one wing-mounted thrust-producing device is moved (or rotated) from a first configuration in which the at least one wing-mounted thrust-producing device provides vertical thrust to a second configuration in which the at least one wing-mounted thrust-producing device provides horizontal thrust. In step 56, the at least one panel is moved from an open configuration in which the at least one panel does not cover the at least two fuselage-mounted thrust-producing devices during the taking off, landing, or hovering of the aircraft to a closed configuration in which the at least one panel covers the at least two fuselage-mounted thrust-producing devices during the horizontal flying of the aircraft. In one embodiment, in step 56 two or more panels are moved to a closed configuration so that they cover two fuselage-mounted thrust-producing devices during the flying of the aircraft. In other embodiments, any number of panels may be moved so that they cover any number of fuselage-mounted thrust-producing devices during the flying of the aircraft. In step 58, the aircraft is flown while the at least one wing-mounted thrust-producing device provides the horizontal thrust and with the at least two fuselage-mounted thrust-producing devices not providing any thrust. In still other embodiments, any of the steps of the method 50 may be varied in substance, in order, or not followed, or one or more additional steps may be added.

One or more embodiments of the disclosure may overcome one or more issues of one or more of the existing aircraft and methods of flight by providing an aircraft and method which allows for the same system of the aircraft to be efficiently used for both vertical operations and horizontal flight.

The Abstract is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus the following claims are hereby incorporated into the Detailed Description, with each claim standing on its own as a separately claimed subject matter.

While particular aspects of the present subject matter described herein have been shown and described, it will be apparent to those skilled in the art that, based upon the teachings herein, changes and modifications may be made without departing from the subject matter described herein and its broader aspects and, therefore, the appended claims are to encompass within their scope all such changes and modifications as are within the true scope of the subject matter described herein. Furthermore, it is to be understood that the disclosure is defined by the appended claims. Accordingly, the disclosure is not to be restricted except in light of the appended claims and their equivalents.

According to aspect of the present disclosure there is provided an aircraft comprising at least one wing-mounted thrust-producing device which is moveably attached to at least one wing of the aircraft and configured to move from a landing/takeoff/hover configuration in which the at least one wing-mounted thrust-producing device provides thrust in a first direction to a flight configuration in which the at least one wing-mounted thrust-producing device provides the thrust in a second direction; and at least two fuselage-mounted thrust-producing devices attached to a fuselage of the aircraft.

The aircraft is disclosed wherein the at least one wing-mounted thrust-producing device is configured to move from the landing/takeoff/hover configuration in which the at least one wing-mounted thrust-producing device provides vertical thrust to a horizontal flight configuration in which the at least one wing-mounted thrust-producing device provides horizontal thrust.

The aircraft is disclosed wherein the at least two fuselage-mounted thrust-producing devices are configured to provide vertical thrust.

The aircraft is disclosed wherein when the aircraft is in flight the at least one wing-mounted thrust-producing device is configured to provide the horizontal thrust and the at least two fuselage-mounted thrust-producing devices are configured to not provide any thrust, and when the aircraft is landing, taking off, or hovering both the at least one wing-mounted thrust-producing device and the at least two fuselage-mounted thrust-producing devices are configured to provide the vertical thrust.

The aircraft is disclosed wherein there are two wing-mounted thrust-producing devices moveably attached to opposed wings of the aircraft, and two fuselage-mounted thrust-producing devices attached to the fuselage of the aircraft.

The aircraft is disclosed wherein the two wing-mounted thrust-producing devices are moveably attached to tips of the opposed wings of the aircraft, and the two fuselage-mounted thrust-producing devices are attached to the fuselage at opposite sides of a centerline between the two wing-mounted thrust-producing devices of the aircraft.

The aircraft is disclosed in which the two wing-mounted thrust-producing devices and the two fuselage-mounted thrust-producing devices comprise fans, and fan blades of two out of four of the fans are configured to spin in a clockwise direction and the fan blades of the other two of the four fans are configured to spin in a counter-clockwise direction. The aircraft is disclosed further comprising at least one panel which is configured to move from the flight configuration in which it covers the at least two fuselage-mounted thrust-producing devices to the landing/takeoff/hover configuration in which it does not cover the at least two fuselage-mounted thrust-producing devices.

The aircraft is disclosed wherein the at least one wing-mounted thrust-producing device and the at least two fuselage-mounted thrust-producing devices each comprise at least one fan and at least one wing duct.

According to another aspect of the present disclosure there is provided an aircraft comprising two wing-mounted thrust-producing devices moveably attached to opposed wings of the aircraft; and two fuselage-mounted thrust-producing devices attached to a fuselage of the aircraft; wherein when the aircraft is in flight the two wing-mounted thrust-producing devices are configured to provide horizontal thrust and the two fuselage-mounted thrust-producing devices are configured to not provide any thrust, and when the aircraft is landing, taking off, or hovering each of the two wing-mounted thrust-producing devices and the two fuselage-mounted thrust-producing devices are configured to provide vertical thrust. The aircraft is disclosed wherein the two wing-mounted thrust-producing devices are moveably attached to tips of the opposed wings of the aircraft, and the two fuselage-mounted thrust-producing devices are attached to the fuselage at opposite sides of the opposed wings of the aircraft.

The aircraft is disclosed in which the two wing-mounted thrust-producing devices and the two fuselage-mounted thrust-producing devices comprise fans, and fan blades of two out of four of the fans are configured to spin in a clockwise direction and the fan blades of the other two of the four fans are configured to spin in a counter-clockwise direction. The aircraft is disclosed further comprising at least two panels, wherein when the aircraft is in flight the at least two panels are configured to cover the two fuselage-mounted thrust-producing devices and when the aircraft is landing, taking off, or hovering the at least two panels are configured to be open to uncover the two fuselage-mounted thrust-producing devices.

The aircraft is disclosed wherein the two wing-mounted thrust-producing devices and the two fuselage-mounted thrust producing devices each comprise a fan and a wing duct.

According to an aspect of the present disclosure there is provided a method of flying an aircraft comprising taking off, landing, or hovering with the aircraft with at least one wing-mounted thrust-producing device attached to at least one wing of the aircraft and at least two fuselage-mounted thrust-producing devices attached to a fuselage of the aircraft both providing vertical thrust; and flying the aircraft while the at least one wing-mounted thrust-producing device provides horizontal thrust and the at least two fuselage-mounted thrust-producing devices do not provide any thrust.

The method is disclosed further comprising moving the at least one wing-mounted thrust-producing device from a first configuration in which the at least one wing-mounted thrust-producing device provides the vertical thrust to a second configuration in which the at least one wing-mounted thrust-producing device provides the horizontal thrust. The method is disclosed further comprising moving at least one panel from an open configuration in which the at least one panel does not cover the at least two fuselage-mounted thrust-producing devices during the taking off, the landing, or the hovering of the aircraft to a closed configuration in which the at least one panel covers the at least two fuselage-mounted thrust-producing devices during the flying of the aircraft.

The method is disclosed wherein the taking off, the landing, or the hovering with the aircraft comprises two wing-mounted thrust-producing devices attached to opposed wings of the aircraft and two fuselage-mounted thrust-producing devices attached to the fuselage of the aircraft all providing vertical thrust, and the flying the aircraft comprises the two wing-mounted thrust-producing devices providing horizontal thrust and the two fuselage-mounted thrust-producing devices not providing any thrust.

The method is disclosed wherein the taking off, the landing, or the hovering with the aircraft comprises two panels being open and not covering the two fuselage-mounted thrust-producing devices, and the flying the aircraft comprises the two panels being closed and covering the two fuselage-mounted thrust-producing devices.

The method is disclosed wherein the two wing-mounted thrust-producing devices and the two fuselage-mounted thrust-producing devices comprise fans, and the taking off, the landing, or the hovering with the aircraft comprises fan blades of two out of four of the fans spinning in a clockwise direction and the fan blades of the other two of the four fans spinning in a counter-clockwise direction.

## Claims

1. An aircraft comprising:
at least one wing-mounted thrust-producing device which is moveably attached to at least one wing of the aircraft and configured to move from a landing/takeoff/hover configuration in which the at least one wing-mounted thrust-producing device provides thrust in a first direction to a flight configuration in which the at least one wing-mounted thrust-producing device provides the thrust in a second direction; and
at least two fuselage-mounted thrust-producing devices attached to a fuselage of the aircraft.

2. The aircraft of claim 1 wherein the at least one wing-mounted thrust-producing device is configured to move from the landing/takeoff/hover configuration in which the at least one wing-mounted thrust-producing device provides vertical thrust to a horizontal flight configuration in which the at least one wing-mounted thrust-producing device provides horizontal thrust.

3. The aircraft of claims 1 or 2wherein the at least two fuselage-mounted thrust-producing devices are configured to provide vertical thrust.

4. The aircraft of claim 2 wherein when the aircraft is in flight the at least one wing-mounted thrust-producing device is configured to provide the horizontal thrust and the at least two fuselage-mounted thrust-producing devices are configured to not provide any thrust, and when the aircraft is landing, taking off, or hovering both the at least one wing-mounted thrust-producing device and the at least two fuselage-mounted thrust-producing devices are configured to provide the vertical thrust.

5. The aircraft of claim 1 wherein there are two wing-mounted thrust-producing devices moveably attached to opposed wings of the aircraft, and two fuselage-mounted thrust-producing devices attached to the fuselage of the aircraft.

6. The aircraft of claim 5 wherein the two wing-mounted thrust-producing devices are moveably attached to tips of the opposed wings of the aircraft, and the two fuselage-mounted thrust-producing devices are attached to the fuselage at opposite sides of a centerline between the two wing-mounted thrust-producing devices of the aircraft.

7. The aircraft of claim 5 in which the two wing-mounted thrust-producing devices and the two fuselage-mounted thrust-producing devices comprise fans, and fan blades of two out of four of the fans are configured to spin in a clockwise direction and the fan blades of the other two of the four fans are configured to spin in a counter-clockwise direction.

8. The aircraft of any preceding claim further comprising at least one panel which is configured to move from the flight configuration in which it covers the at least two fuselage-mounted thrust-producing devices to the landing/takeoff/hover configuration in which it does not cover the at least two fuselage-mounted thrust-producing devices.

9. The aircraft of any preceding claim wherein the at least one wing-mounted thrust-producing device and the at least two fuselage-mounted thrust-producing devices each comprise at least one fan and at least one wing duct.

10. A method of flying an aircraft comprising:
taking off, landing, or hovering with the aircraft with at least one wing-mounted thrust-producing device attached to at least one wing of the aircraft and at least two fuselage-mounted thrust-producing devices attached to a fuselage of the aircraft both providing vertical thrust; and
flying the aircraft while the at least one wing-mounted thrust-producing device provides horizontal thrust and the at least two fuselage-mounted thrust-producing devices do not provide any thrust.

11. The method of claim 10 further comprising moving the at least one wing-mounted thrust-producing device from a first configuration in which the at least one wing-mounted thrust-producing device provides the vertical thrust to a second configuration in which the at least one wing-mounted thrust-producing device provides the horizontal thrust.

12. The method of claims 10-11 further comprising moving at least one panel from an open configuration in which the at least one panel does not cover the at least two fuselage-mounted thrust-producing devices during the taking off, the landing, or the hovering of the aircraft to a closed configuration in which the at least one panel covers the at least two fuselage-mounted thrust-producing devices during the flying of the aircraft.

13. The method of claims 10-12 wherein the taking off, the landing, or the hovering with the aircraft comprises two wing-mounted thrust-producing devices attached to opposed wings of the aircraft and two fuselage-mounted thrust-producing devices attached to the fuselage of the aircraft all providing vertical thrust, and the flying the aircraft comprises the two wing-mounted thrust-producing devices providing horizontal thrust and the two fuselage-mounted thrust-producing devices not providing any thrust.

14. The method of claim 13 wherein the taking off, the landing, or the hovering with the aircraft comprises two panels being open and not covering the two fuselage-mounted thrust-producing devices, and the flying the aircraft comprises the two panels being closed and covering the two fuselage-mounted thrust-producing devices.

15. The method of claim 13 wherein the two wing-mounted thrust-producing devices and the two fuselage-mounted thrust-producing devices comprise fans, and the taking off, the landing, or the hovering with the aircraft comprises fan blades of two out of four of the fans spinning in a clockwise direction and the fan blades of the other two of the four fans spinning in a counter-clockwise direction.
